# EUROPÄISCHE PATENTANMELDUNG

(11) **EP 1 030 096 A2**
(43) Veröffentlichungstag der Anmeldung: **23.08.2000**
(21) Anmeldenummer: 00102522.0
(22) Anmeldetag: 07.02.2000
(51) Int. Cl.: F16L 55/033, F01N 7/18

(54) **Elastische Aufhängung mit Tilger**

(30) Priorität: 15.02.1999 DE 19906258
(71) Anmelder: WOCO Franz-Josef Wolf & Co., D-63628 Bad Soden-Salmünster (DE)
(72) Erfinder: Wolf, Franz Josef, 63628 Bad Soden-Salmünster (DE); Mohr, Martin, 63628 Bad Soden (DE); Heckmann, Gerhard, 36381 Schlüchtern (DE); Kalkhof, Volker, 63571 Gelnhausen (DE)
(74) Vertreter: Jaeger, Klaus, Dipl.-Chem. Dr.

(57) **Zusammenfassung**

Eine elastische Aufhängung für mit Störschwingungen beaufschlagte Bauteile, insbesondere eine Halteschlaufe für eine Kraftfahrzeugabgasanlage, weist elastische Haltestege auf, über die eine Tilgermasse an die lastaufnehmenden Abschnitte der Elastomerschlaufe angekoppelt ist, statt in dieser einvulkanisiert zu sein. Die Tilgerresonanz lässt sich dadurch unabhängig von der Federsteifigkeit der tragenden Elastomerschlaufe abstimmen.

## Beschreibung

Die Erfindung betrifft eine elastische Aufhängung, insbesondere eine Halteschlaufe für die Aufhängung der Abgasanlage eines Kraftfahrzeugs unter dem Boden des Fahrzeugaufbaus, die in der im Oberbegriff des Patentanspruchs 1 beschriebenen Weise mit einer Tilgermasse ausgerüstet ist.

Eine elastische Aufhängung der im Oberbegriff des Patentanspruchs 1 beschriebenen Art ist aus der deutschen Offenlegungsschrift DE 44 39 631 A1 bekannt. Diese Aufhängung besteht im wesentlichen aus einer Elastomerschlaufe mit einer in sich geschlossenen Außenkontur. In der Elastomerschlaufe sind zwei in Lastrichtung einander gegenüberliegende Halteäsen ausgebildet, von denen die eine der Aufnahme eines am Fahrzeugboden befestigten Traghakens, die andere der Aufnahme eines an der aufzuhängenden Abgasanlage befestigten Lasthakens dient. Zwischen diesen beiden Kraftangriffen ist eine Tilgermasse unmittelbar in die tragenden Abschnitte der Elastomerschlaufe einvulkanisiert. Im Bedarfsfall kann dabei die Tilgermasse auch über die Außenkontur der Elastomerschlaufe hinausragen.

Der so in der bekannten Elastomerschlaufe angeordnete Tilger dient dem Zweck, akustisch als besonders störend empfundene Schwingungen zweiter Ordnung zu tilgen, die von der Brennkraftmaschine des Kraftfahrzeuges auf die Abgasleitung übertragen werden. Dabei kann eine Abstimmung des tilgungswirksamen Frequenzbandes sowohl über eine Veränderung der Tilgermasse als auch über eine Veränderung der Konfiguration der Außenkontur der Elastomerschlaufe und der Elastomerkenndaten der Schlaufe als auch durch eine Kombination beider Maßnahmen vorgenommen werden.

Mit den größer gewordenen Anforderungen an Kraftfahrzeugabgasleitungen hinsichtlich der akustischen Dämpfung und der chemischen Entgiftung der Abgase auf einem möglichst niedrigen Niveau des Leistungsverlustes sind die Abgasanlagen von Kraftfahrzeugen in den letzten Jahren zunehmend schwerer geworden. Dementsprechend müssen auch die Aufhängeschlaufen für solche Abgasleitungen verstärkt werden. Hierzu dienen im wesentlichen drei Maßnahmen, nämlich (1) die Verwendung festerer und härterer Elastomerwerkstoffe, (2) eine größere geometrische Dimensionierung der Halteschlaufen und (3) die Verwendung einvulkanisierter Einlagen aus Werkstoffen mit höherer Festigkeit und Steifigkeit als sie das verwendete Elastomer aufweist. Diese zum genannten Zweck wirksamen Maßnahmen führen jedoch auch zu einer erheblichen Verminderung der Entkopplung akustischer Frequenzen in solcherart verstärkten Halteschlaufen. Der steifer ausgelegte Werkstoff der Halteschlaufe bei statischer Belastung und die zunehmende dynamische Steifigkeit der Schlaufe unter dynamischer Belastung vermindern die Wirkung der Tilgermasse in der Aufhängeschlaufe im Bereich sinnvoll anwendbarer Tilgermassen so weit, daß diese praktisch unwirksam werden.

Ausgehend von diesem Stand der Technik liegt der Erfindung das technische Problem zugrunde, eine Aufhängeschlaufe der erörterten Art zu schaffen, die einerseits eine hohe statische Steifigkeit und Festigkeit, d.h. eine hohe Tragfähigkeit für schwere Abgasleitungen, aufweist gleichzeitig aber andererseits eine so niedrige dynamische Steifigkeit aufweist, daß der aktustische Störschwingungsbereich, speziell im Frequenzband von rund 80 Hz bis 300 Hz, wirksam getilgt werden kann.

Zur Lösung dieser Aufgabe weist ein Tilger der Erfindung die im Patentanspruch 1 genannten Merkmale auf.

Die Erfindung beruht also auf dem wesentlichen Merkmal, statt der primär lastaufnehmenden Abschnitte der Halteschlaufe, andere Federelemente für das Feder-Tilgermasse-System vorzusehen, die zwar in der erforderlichen Weise unter Wahrung der Übertragungsfunktion an die Elastomerschlaufe angekoppelt, hinsichtlich ihrer Federkenndaten aber von dieser unabhängig sind.

Aufgrund dieser Bauweise der Halteschlaufe läßt sich so der wesentliche Vorteil erzielen, daß die jeweils eingestellte und abgestimmte Resonanzfrequenz der Tilgermasse unabhängig ist und auch während des Betriebs, d.h. während der dynamischen Belastung der Halteschlaufe, unabhängig bleibt von der Steifigkeit der tragenden Elastomerschlaufe. Im Ergebnis wird so eine Halteschlaufe für störschwingungsbeaufschlagte Bauteile erhalten, die bei der hohen von der Anwendung her geforderten statischen Steifigkeit der Elastomerschlaufe selbst, gleichzeitig, und zwar insbesondere im speziellen Zielbereich von 80 Hz bis 300 Hz, eine ausgesprochen niedrige dynamische Steifigkeit nicht nur im statischen Zustand der Elastomerschlaufe, sondern auch unter dynamischer Tragfederbelastung der Elastomerschlaufe, aufweist und beibehält.

Die Erfindung ist im folgenden anhand eines Ausführungsbeispiels der elastischen Aufhängung und in Verbindung mit der Zeichnung näher erläutert. Es zeigen:
- Fig. 1: teils in Seitensicht, teils im Querschnitt aus Seitensicht eine Halteschlaufe mit den Merkmalen der Erfindung; und
- Fig. 2: das in Fig. 1 dargestellte Ausführungsbeispiel in dem um 90° verdrehten Längsschnitt im oberen Teil der Darstellung und mit der um 90° verdrehten Seitensicht im unteren Teil der Figur.

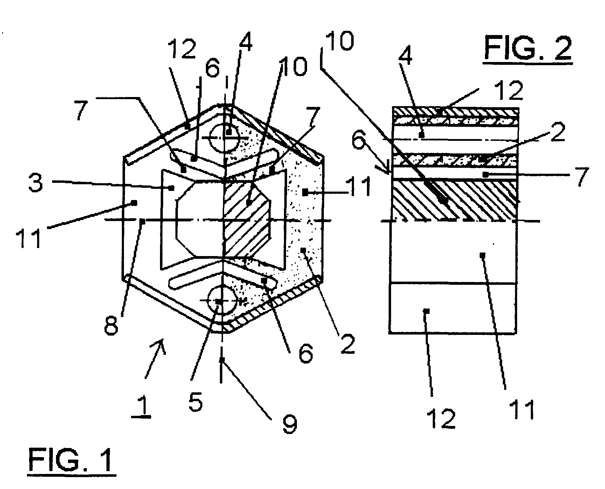

Das Ausführungsbeispiel der Halteschlaufe 1 ist in den Figuren 1 und 2 im Teilquerschnitt und im Teillängsschnitt dargestellt. Die Elastomerschlaufe 2 ist als gleichseitiges Sechskantprisma ausgebildet, das einen durchgehend offenen nichtrunden Zentralkanal 3 aufweist. In der Elastomerschlaufe 2 sind weiterhin zwei Halteösen 4,5 ausgeformt, von denen die eine, nämlich die in den Figuren obenliegende Halteöse 4, der Aufnahme eines in den Figuren nicht dargestellten Traghakens dient, der seinerseits, was in den Figuren ebenfalls nicht dargestellt ist, an dem Unterboden oder einem Unterträger eines Kraftfahrzeugaufbaus befestigt ist, während die andere, nämlich die Halteöse 5, die in der Darstellung der Figur 1 unten liegt, der Aufnahme eines ebenfalls nicht dargestellten Lasthakens dient, der seinerseits fest und tragfähig mit der aufzuhängenden Abgasleitung verbunden ist.

In der Elastomerschlaufe 2 sind weiterhin symmetrisch zueinander zwei axial von einer Stirnseite der Elastomerschlaufe zur gegenüberliegenden Stirnseite der Elastomerschlaufe offen durchlaufende, im Querschnitt dachförmig gewinkelt konfigurierte Ausnehmungen 6 so ausgeformt, daß sie mit einer Spannweite, die ungefähr gleich dem lichten Durchmesser der Ausnehmung 3 in der Elastomerschlaufe 2 ist, gemessen in einer Ebene 8, die senkrecht zu einer Mittelachse 9 liegt, die die Mittelachsen der beiden Halteösen, diese orthogonal schneidend, miteinander verbindet. Dabei ist die dachartige Winkelung dieser Ausnehmungen 6 so ausgerichtet, daß die auf der Mittelachse 9 liegende Spitze außenseitig in Richtung auf die jeweils gegenüberliegende Hülsenöse weist, während sich der innenliegende Winkel der dachartig konfigurierten axialen Ausnehmung 6 zur jeweils nächstliegenden Halteöse hin öffnet.

Durch diese Profilierung und Konfiguration sind aus der Elastomerschlaufe 2 vier dünne Haltestege 7 ausgeformt, an die gemeinsam eine Tilgermasse 10 unter Bildung eines heterogenen Stoffschlusses anvulkanisiert ist. Mit dieser Konstruktion ist eine Anbindung der Tilgerwirkung der schwingungsbeaufschlagten Tilgermasse 10 an die Elastomerschlaufe 2 erreicht, die von der statischen und von der effektiven dynamischen Steifigkeit der lastaufnehmenden Abschnitte des Hauptteils der Elastomerschlaufe 2 praktisch vollständig abgekoppelt ist. Die Resonanzfrequenz der Tilgermasse 10 kann durch die Konfiguration der vier Haltestege 7, durch deren Dicke, durch die Art der Anbindung dieser Stege an die Tilgermasse 10 sowie, nicht zuletzt, durch die Grösse der Masse des Tilgermassenstücks 10, abgestimmt werden. Dabei ist in dem in den vorliegenden Figuren gezeigten Ausführungsbeispiel eine besonders niedrige dynamische Steifigkeit dadurch erzielbar, daß die Haltestege 7 beim Schwingen der Tilgermasse 10 auch größere Anteile von Biegemomenten zulassen. Dabei ist jedoch in jedem Fall gewährleistet, daß aufgrund dieser Anbindung eine Zunahme der dynamischen Federsteifigkeit in den lasttragenden Abschnitten 11 der Elastomerschlaufe 2 keinen Einfluß auf die Abstimmung der Resonanzfrequenz des Tilgersystems 7,10 hat, also diese Resonanzfrequenz sich auch bei dynamischer Belastung der Elastomerschlaufe 2 insbesondere nicht verändert.

Um ein Ausreißen der Traghaken und Lasthaken auch bei ungewöhnlich großen an der Halteschlaufe angreifenden Amplituden oder bei Durchschlägen zu verhindern, ohne dabei zusätzlich eine Elastomerverstärkung aufbauen zu müssen, sind die über und unmittelbar angrenzend an die Halteösen 4 5 ausgebildeten Außenwandflächen durch anvulkanisierte übergreifende dachartige Stahlblechflächen 12 verstärkt.

In dem in den Figuren 1 und 2 gezeigten Ausführungsbeispiel der elastischen Aufhängung sind die Haltestege 7 für die Tilgermasse 10 durch eine spezielle Konfiguration der Matrix der Elastomerschlaufe 2 realisiert. Dem Fachmann ist ersichtlich, daß zahlreiche andere Realisierungen dieser Haltestege verfügbar sind, beispielsweise in der Weise, daß das Tilgermassestück 10 und die Haltestege 7 einstückig aus Kunststoff oder Metall hergestellt sind und dann nach dem Ausvulkanisieren der Elastomerschlaufe 2 in die zentralaxiale Bohrung 3 eingespannt, alternativ vor dem Ausformen der Elastomerschlaufe einvulkanisiert werden.

Zudem braucht der Querschnitt der Halteschlaufe nicht sechseckig zu sein. Im Bezug auf die Erfindung leistet eine Halteschlaufe gleiche Dienste bei runder oder ovaler Querschnittskonfiguration.

Entsprechend brauchen auch die Halteösen nicht durch außenliegende und stoffschlüssig aufgebundene Bleche vor einem Ausreißen gesichert zu sein, sondern können auch durch entsprechend verankerte innenliegende Verstärkungshülsen oder durch zusätzlich außen angeformtes Elastomer geschützt werden.

Wesentlich ist bei der Konfiguration der gesamten Halteschlaufe lediglich, daß die Tilgermasse 10 nicht an eine Feder oder einen Federabschnitt als Tilgerfeder angekoppelt ist, die Teil der lastaufnehmenden und schwingenden Abschnitte der Elastomerschlaufe 2 sind, sondern an diese über spezielle federnde, vorzugsweise elastische Haltestege, ggf. auch Haltezungen, als Tilgerfedern angebunden sind.

## Patentansprüche

1. Elastische Aufhängung für mit Störschwingungen beaufschlagte Bauteile, insbesondere eine Halteschlaufe für eine Kraftfahrzeugabgasanlage, bei der in einer Elastomerschlaufe zwischen zwei Halteösen eine Tilgermasse angeordnet ist,
**gekennzeichnet** durch elastische Haltestege (7), über die die Tilgermasse (10) an die lastaufnehmenden Abschnitte (11) der Elastomerschlaufe (2) angekoppelt ist.

2. Elastische Aufhängung nach Anspruch 2,
**gekennzeichnet** durch eine Ausbildung der Haltestege (7) als Abschnitte der Elastomerschlaufe (2).

3. Elastische Aufhängung nach einem der Ansprüche 1 oder 2,
**gekennzeichnet** durch eine Konfiguration der Haltestege (7), die ein dreidimensional freies Schwingen der Tilgermasse (10) in der Elastomerschlaufe (2) ermöglicht.

4. Elastische Aufhängung nach einem der Ansprüche 1 bis 3,
**gekennzeichnet** durch Haltestege (7) aus einem Etastomer, eine Titgermasse (10) aus Metall oder Kunststoff und eine während der Vulkanisation des Elastomers hergestellte heterogene Stoffschlussverbindung zwischen dem Elastomer und der Tilgermasse.

5. Verwendung der elastischen Aufhängung mit den Merkmalen nach einem der Ansprüche 1 bis 4 zum Tilgen akustischer Störschwingungen, insbesondere im Frequenzbereich von 80 Hz bis 300 Hz, in Aufhängungen einer Kraftfahrzeugabgasantage an einem Kraftfahrzeugaufbau.
